# EUROPEAN PATENT APPLICATION

(11) **EP 4 302 641 A1**
(43) Date of publication of application: **10.01.2024**
(21) Application number: 22182792.6
(22) Date of filing: 04.07.2022
(51) Int. Cl.: A46B 5/00, A46B 7/06, A46B 7/02, A46B 9/04, A46B 13/02

(54) **ORAL HEALTH CARE DEVICE**

(71) Applicant: Koninklijke Philips N.V., 5656 AG Eindhoven (NL)
(72) Inventor: GOTTENBOS, Bart, Eindhoven (NL); ADRIAENSEN, Guido Antonius Theodorus, Eindhoven (NL); WILLIAMS, Kayleigh Karina, Eindhoven (NL); BRANDAO SILVA, Priscilla, Eindhoven (NL)
(74) Representative: Philips Intellectual Property & Standards

(57) **Abstract**

An oral cleaning arrangement for an oral care device permitting pivoting of a cleaning element unit having at least two groups of cleaning elements defining different respective spatial/geometric arrangements/patterns, such that both groups of cleaning elements may be angled in such a way that they can be applied simultaneously to a tooth surface to be cleaned.

## Description

### FIELD OF THE INVENTION

This invention relates to the field of oral cleaning, and in particular to the field of oral cleaning devices.

### BACKGROUND OF THE INVENTION

Within the area of personal oral cleaning, it remains a challenge to optimize the structure and configuration of oral cleaning devices so as to enable best cleaning performance for all types of teeth, and for all areas of each tooth.

One growing area of development is that of brushing mouthpieces. Brushing mouthpieces are envisioned to disrupt the toothbrush market in the future, as they have the potential to brush faster, more consistent and more complete than a toothbrush. However, no acceptable cleaning mouthpieces have to this date reached the market that can compete with a normal toothbrush in cleaning functionality. Designing a brushing mouthpiece which works as well as a manual toothbrush has proved to be a major challenge.

### SUMMARY OF THE INVENTION

Research conducted by the inventors of the present invention has found that, in any type of oral cleaning device, to achieve good overall interproximal and gum line cleaning, ideally more than one cleaning element layout is required in a single device. For instance, the optimal cleaning element length for interproximal cleaning is longer than the optimal cleaning element length for gum line cleaning, and optimal angle of extension of the cleaning elements may also be different. However, providing both these optimal cleaning element layouts in one oral cleaning arrangement has been found to pose new problems. In particular, it has been realized by the inventors that the different length or angular extension of the cleaning elements has the effect of making it awkward to engage all the cleaning elements types in contact with tooth surfaces at once. For instance, the longer cleaning elements may prevent the smaller gum line cleaning elements from even reaching the tooth. This may be a problem even in a traditional toothbrush. A similar problem is caused by different angular extensions: it is difficult to have all cleaning elements contact a tooth at once.

The invention is defined by the claims.

According to examples in accordance with an aspect of the invention, there is provided an oral cleaning arrangement.

The oral cleaning arrangement comprises: a main body; at least one cleaning element unit, the cleaning element unit comprising a base and further comprising at least two groups of cleaning elements upstanding from the base, each group defining a spatial layout, height profile and/or angular profile of the cleaning elements with respect to the base, and the two groups being spaced from one another by a gap; wherein the cleaning element unit is linked to the main body by a coupling which permits pivotal or angular motion of the cleaning element unit base relative to the main body; wherein the oral cleaning arrangement is arranged for engaging teeth of a user with cleaning elements of the at least one cleaning element unit during use, and wherein said coupling is such as to permit changing of an angle of the base with respect to teeth to which the device is being engaged.

Proposed concepts thus aim to provide schemes, solutions, concept, designs, methods and systems pertaining to an oral cleaning arrangement.

In particular, embodiments aim to provide an oral cleaning arrangement with a pivotable cleaning element unit, thereby permitting the cleaning element unit to align optimally with the tooth surface so that the at least two groups of cleaning elements may both make contact with the teeth simultaneously. If the cleaning element unit could not pivot, any longer cleaning elements might push away the cleaning element unit from the teeth, potentially inhibiting any shorter cleaning elements from reaching the teeth. Pivoting prevents this as the force from any longer cleaning elements will pivot the cleaning element unit until the shorter cleaning elements also reach and push against the teeth.

In other words, it is proposed that the cleaning element unit being pivotable will allow the unit to pivot in reaction to the force on its cleaning elements. For example, if only the cleaning elements on one side of the cleaning element unit are engaging the teeth, then the force on that side of the unit will be greater than the force on the side of the unit with cleaning elements not being engaged, and so the unit will pivot until the forces become balanced i.e. until cleaning elements on both sides of the unit are engaging the teeth.

By allowing the cleaning element unit to pivot, the cleaning element unit may include groups of cleaning elements of potentially different spatial layouts, height profiles, and/or angular profiles. This achieves good overall interproximal and gum line cleaning whilst negating the issue of different groups of cleaning elements interfering with one another.

By providing an oral cleaning arrangement with a pivotable cleaning element unit, embodiments may support improved overall tooth cleaning. Improved oral health care may therefore be provided by proposed concepts.

Ultimately, an improved oral cleaning arrangement may be supported by the proposed concept(s).

In some embodiments, the cleaning element unit may comprise two groups of cleaning elements. Research by the inventors has shown two groups of cleaning elements may be an optimal number for good overall cleaning of a tooth.

In some embodiments, the coupling may define a linear rotation axis and wherein the base of the cleaning element unit is pivotable about said linear rotational axis.

In some embodiments, the linear rotational axis defined by the coupling extends through the body of the base of the cleaning element unit, preferably substantially parallel to a surface of the base from which the two groups of cleaning elements upstand, or at least overlaps with the area covered by the cleaning element base.

In some embodiments, the coupling may define a linear rotational axis which extends through the gap in-between the at least two groups of cleaning elements.

In some embodiments, each of the groups of cleaning elements is spaced from the rotation axis defined by the coupling.

In some embodiments, there are at least two groups of cleaning elements located on different respective sides of a linear rotation axis defined by the coupling.

In some embodiments, at least a portion of the cleaning arrangement is for being received in the mouth for normal use, and wherein the cleaning arrangement is configured such that a point or axis of rotation defined by the coupling between the cleaning element unit and the main body is located such that it is received within the mouth when the cleaning arrangement is received in the mouth for normal use. This provides improved maneuverability since the cleaning unit can pivot about a point or axis which is inside the mouth during normal use.

In some embodiments, the at least one cleaning element unit is seated within a cavity or depression formed into the main body. In some embodiments, the at least one cleaning unit is supported within said cavity by the pivotal coupling. The cleaning element preferably has sufficient clearance within the cavity to pivot to different angles with respect to the main body.

In some embodiments, the groups of cleaning elements may define different spatial layouts, height profiles and/or angular profiles of the cleaning elements with respect to the base, compared to one another. This allows the groups of cleaning elements to be specifically optimized for cleaning different areas of a tooth. For instance, different cleaning element designs are needed to effectively clean gum line and interproximal regions. For example, the gum line region may be optimally cleaned at a 45° cleaning element roll angle, while the interproximal region may be optimally cleaned at a 90° cleaning element roll angle. Longer cleaning elements may be better at cleaning interproximal regions, and shorter cleaning elements may be better at cleaning gum line regions.

In some embodiments, the aforementioned coupling may be such as to permit varying of an angle between the main body and a directional axis of the cleaning element unit extending from the first cleaning element group to the second cleaning element group. The varying of this angle allows the cleaning element unit to pivot in a way so as to permit both the first cleaning element group and the second cleaning element group to make contact with a tooth surface for cleaning. For example, one group will angle towards the tooth and the other group will angle away from the tooth, and this thereby permits both groups to contact the teeth with a similar force.

In some embodiments, the coupling may be such as to restrict linear motion of the base relative to the main body along a direction defined by an axis extending from the first cleaning element group to the second cleaning element group. This may prevent motion transfer of the optimal brushing motions to movement of the coupling, thereby preventing the limiting of brushing action and reach. Brushing may be optimal if the cleaning element unit is stiff in the primary direction of brushing.

In some embodiments, each group of cleaning elements may define an elongate shaped footprint on the base. Research has shown that groups of cleaning elements in an elongate shape, e.g. a vertical line, may outperform groups of cleaning elements in other layouts. Cleaning element groups having an elongate shaped footprint may also require low normal force to effectively clean teeth, thereby minimizing the required brushing energy while increasing the comfort of the user.

In some embodiments, the width of the elongate shaped footprint may be less than 6mm. Cleaning elements in a narrow layout may enter the narrow vertical spaces between teeth most optimally, and may be more effective in contour-following of the dentition than other layouts.

Each of the cleaning element groups is spaced preferably by a gap with respect to any pivot axis relative to which the cleaning element unit pivots such that the pivoting about that axis will change an angle of the cleaning element groups relative to a tooth surface. In other words, the cleaning element groups are preferably not all at the location of the pivot axis.

In some embodiments, the coupling may permit rotational motion of the base relative to the main body in at least a first plane of rotation which is orientated substantially normal to a surface of the base from which the cleaning elements extend, and extends along a direction from the first group of cleaning elements to the second group of cleaning elements, and preferably wherein both the first and second group of cleaning elements define parallel elongate footprints on the base having a length, and wherein the plane of rotation is substantially perpendicular to a direction of said length. Rotational motion of the base relative to the main body in this plane of rotation permits both the first cleaning element group and the second cleaning element group to contact the tooth surface to be cleaned in use with a similar force.

In some embodiments the coupling may further permit rotational motion relative to the main body in a second plane of rotation which is orientated substantially normal to a surface of the base from which the cleaning elements extend, and extends along a direction perpendicular to a line from the first group of cleaning elements to the second group of cleaning elements. This may allow the cleaning element unit some additional contour following, if for example, the lower part of the tooth is thinner than the upper part, such as is the case for incisors and canine tooth geometries.

In some embodiments, the oral cleaning arrangement may be for use as part of a brushing mouthpiece device. The oral cleaning arrangement may comprise a mouthpiece portion for at least partial receipt in the mouth during use. A body of the mouthpiece portion may define a tooth receiving channel defining an arcuate contour shaped for approximately following a contour of at least a portion of a user's dental arch to permit receipt of a row of teeth into the channel. The at least one cleaning element unit may be arranged such that the cleaning elements of the first and second cleaning element groups extend into the channel, e.g. from a side face, for engagement with teeth surfaces during use. The coupling may comprise a connection point displaced from the cleaning element unit at a location in-between sides of the channel, for example integrated in a floor of the channel. The coupling may further comprise an arm extending from the connection point to the cleaning element unit base. The connection point may permit an angular or swinging motion of the arm (e.g. a pivotal motion) for permitting swinging of the cleaning element unit along an arc relative to the connection point to thereby change an angle of the cleaning element unit relative to tooth surfaces of teeth received in the channel.

A mouthpiece device may particularly benefit from the pivotable oral cleaning arrangement described in this application as a user cannot adapt the orientation of the cleaning elements themselves.

In some embodiments, the brushing mouthpiece device may comprise multiple cleaning element units at a series of positions along the arcuate contour defined by the mouthpiece portion, for cleaning teeth at different locations along the dental arch. This may provide a mouthpiece device in which different cleaning element layouts can be optimally positioned at pre-defined locations along the dental arch for engaging with pre-defined tooth types.

In some embodiments, the oral cleaning arrangement may include a pair of cleaning element units facing one another from opposite positions across the channel, for respectively cleaning different sides of teeth received in the channel. The cleaning element units may be connected to said same connection point by respectively oppositely extending arms, wherein the pivotal motion of the pair of cleaning element units is coupled such that the two pivotally swing together about the connection point. This may allow both sides of a tooth to be cleaned simultaneously.

In some embodiments, the brushing mouthpiece device may have upper and lower tooth receiving channels for receiving upper and lower rows of teeth simultaneously, separated from one another by a mutual channel floor which integrates the connecting point and arms, and wherein the oral cleaning arrangement includes at least one cleaning element unit arranged for engaging with teeth received in each of the upper and lower tooth receiving channels respectively. This may allow both upper and lower teeth to be cleaned with the same device, and potentially at the same time.

In some embodiments, each of the aforementioned pairs of opposing cleaning element units may have upper and lower sections, arranged for engaging teeth in the upper and lower channels of the mouthpiece device simultaneously, each section having a respective first and second group of cleaning elements. This provides one efficient arrangement for enabling both the upper and lower rows of teeth to be cleaned with the same mouthpiece device, and potentially at the same time.

In some embodiments, the oral cleaning arrangement may further comprise a functional component for performing an oral care function mounted at a location within the gap between the first and second group of cleaning elements, and optionally wherein the functional component is one of: a source of light, a source of radio frequency field, at least one pair of electrodes, or one or more nozzles for emitting a fluid. This may allow optimization of the space available in the oral cleaning arrangement for the benefit of further improving oral care.

In some embodiments, the oral cleaning arrangement may form a brush head for a toothbrush. This may provide an enhanced toothbrush, capable of better overall tooth cleaning. The main body may be a platen of the brush head for example. The main body may be a part of the brush head which is for being received in the mouth during use, such that the base of each cleaning element unit is pivotable relative to a part which is received in the mouth, to improve maneuverability.

In some embodiments, the gap between the first and second groups of cleaning elements is greater than 2 mm, for example, at least between 3-20mm. This corresponds to roughly 0.5-2 tooth widths, and research has shown this gap between groups of cleaning elements to be particularly advantageous.

In some embodiments, a maximum height of the cleaning elements of the first group, in a direction normal to the base, may be greater than a maximum height of the cleaning elements of the second group, in a direction normal to the base, and preferably wherein said maximum height of the cleaning elements of the first group is between 4-10mm, and preferably wherein said maximum height of the cleaning elements of the second group is between 2 and 6 mm. Research has shown a combination of these heights may be optimal for good overall tooth cleaning.

In some embodiments, the cleaning elements of the first group of cleaning elements may extend from the base at a first angle, and the cleaning elements of the second group of cleaning elements may extend from the base at a different second angle, wherein the second angle is shallower than the first angle, and preferably wherein the second angle is between 40° and 90°, more preferably approximately 45°, and preferably wherein the first angle is between 80° and 90°, more preferably approximately 90°. Research has shown a combination of these angles may be optimal for good overall tooth cleaning.

In some embodiments, the coupling may be such as to restrict rotational motion of the base relative to the main body about a linear rotation axis normal to the surface of the base from which the cleaning elements extend. This may prevent motion transfer of the optimal brushing motions to movement of the coupling, thereby preventing the limiting of brushing action and reach.

In some embodiments, the coupling may define a linear rotation axis which is at a distance from the base, and wherein the cleaning element unit may be connected to a location of the rotation axis by an arm structure. This may allow a pivot point to be at a distance from the cleaning element unit, whilst still permitting angling of both the first cleaning element group and the second cleaning element group towards a tooth surface to be cleaned in use, thereby defining an orbital motion of the cleaning element unit.

In some embodiments, the cleaning arrangement may further comprise an actuation device for driving a cyclical or periodic motion of the oral cleaning arrangement. Research has shown that a vibrating, tapping-like motion of the cleaning elements may provide improved tooth cleaning.

In some embodiments, the oral cleaning arrangement may comprise a plurality of cleaning element units arranged side by side. This may allow improved cleaning of multiple teeth simultaneously.

In some embodiments, an oral care device may be provided, comprising an oral cleaning arrangement in accordance with any example or embodiment described in this disclosure, or in accordance with any claim of this application. The device may further comprise an actuation means for inducing, in operation, a cyclical or periodic motion of cleaning elements.

In some embodiments, the cyclical or periodic motion may be linear cyclical motion along a linear directional axis. In some embodiments, the coupling may be such that the cleaning element unit base is pivotable relative to the main body of the oral cleaning arrangement about a rotational axis which is substantially parallel with said linear directional axis of the motion. This may provide improved cleaning of a tooth with less effort expended by a user of the oral care device.

In some embodiments, the coupling of the oral care device may be such as to prevent linear motion of the cleaning element unit base relative to the main body of the oral cleaning arrangement along a direction of said linear axis. This may prevent motion transfer of the optimal brushing motions to movement of the coupling, thereby preventing the limiting of brushing action and reach.

Thus, there may be proposed concepts for providing an oral cleaning arrangement, wherein at least one cleaning element unit is pivotable relative to a main body in order to angle both a first cleaning element group and a second cleaning element group towards a tooth surface to be cleaned.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figs. 1a and 1b schematically illustrate the problem the inventors seek to address by the invention of this application;
Fig. 2 is a schematic diagram of an oral cleaning arrangement according to a proposed embodiment;
Fig. 3 is a schematic plan-view diagram of a cleaning element unit according to a proposed embodiment;
Fig. 4 is a schematic diagram showing the general structure of an example mouthpiece device known in the art;
Fig. 5 is a schematic diagram of a brushing mouthpiece device including oral cleaning arrangements according to a proposed embodiment;
Fig. 6 is a schematic diagram of the brushing mouthpiece device of Fig. 5 in use;
Fig. 7a is a schematic diagram of a side cross-sectional view of a toothbrush head including oral cleaning arrangements according to a proposed embodiment; and
Fig. 7b is a schematic diagram of a plan view of the toothbrush head of Fig. 7a.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to assisting an oral health care routine of a user. According to proposed concepts, a number of possible solutions may be implemented separately or jointly. That is, although these possible solutions may be described below separately, two or more of these possible solutions may be implemented in one combination or another.

Embodiments of the invention aim to provide an oral cleaning arrangement for an oral care device that provides improved tooth cleaning by permitting the pivoting of a cleaning element unit having at least two groups of cleaning elements defining different respective spatial/geometric arrangements/patterns, such that both groups of cleaning elements may be angled in such a way that they can be applied simultaneously to a tooth surface to be cleaned. If the cleaning element unit was not pivotable, then any longer cleaning elements could potentially push away the cleaning element unit from the teeth, potentially inhibiting any shorter cleaning elements from reaching the teeth. Pivoting prevents this as the force from any longer cleaning elements will pivot the cleaning element unit until the shorter cleaning elements also reach and push against the teeth.

Proposed concepts thus aim to provide an oral cleaning arrangement which includes a pivotable cleaning element unit so as to ensure both groups of cleaning elements make contact with a tooth during brushing, and devices including said oral cleaning arrangement(s), thereby providing improved tooth cleaning.

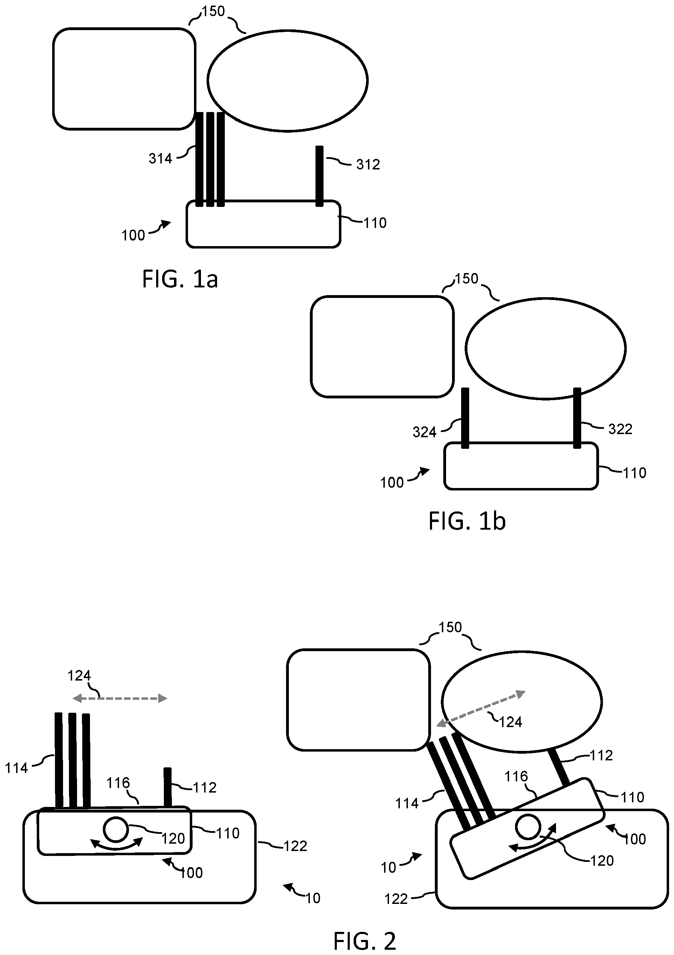

The anticipated problem which the inventors seek to address is further illustrated in Fig. 1a and Fig. 1b. In these figures are depicted schematic diagrams of oral cleaning arrangements which do not embody the invention. In Fig. 1a, the cleaning element unit 100 comprises a group of longer cleaning elements 314 and a group of shorter cleaning elements 312. As can be seen, the group 314 of long cleaning elements are keeping the cleaning element unit 100 too far from the teeth 150 for the group 312 of short cleaning elements to reach the teeth. Fig. 1b shows a similar problem for a case in which both groups of cleaning elements include cleaning elements of the same height. As can be seen, the first group of cleaning elements 322 are engaging with a tooth surface 150, but this is then keeping the other group of cleaning elements 324 from engaging with the gap between the teeth. In both of the depicted cases, there is inadequate cleaning of all oral surface areas due to the fact that the cleaning elements cannot reach all areas of the teeth during cleaning.

The inventive realization underlying the present invention is that the addition of a coupling linking the cleaning element unit to a main body, permitting pivotal or angular motion of the cleaning element unit base 110 relative to the main body, would allow both groups of cleaning elements to make contact with the teeth. An additional degree of freedom is effectively introduced.

Referring now to Fig. 2, there is depicted a schematic cross-sectional diagram of an oral cleaning arrangement according to a proposed embodiment. Fig. 2 (left) shows the cleaning arrangement according to this set of embodiments in isolation, and Fig. 2 (right) shows the cleaning arrangement in use for cleaning teeth.

The oral cleaning arrangement 10 comprises at least one cleaning element unit 100 which itself comprises a base 110 and at least two groups of cleaning elements, 112 and 114, upstanding from the base, each group defining a different respective spatial layout, height profile and/or angular profile of the cleaning elements with respect to the base. The two groups are spaced from one another by a gap 116. The cleaning element unit is linked to a main body 122 of the oral cleaning arrangement by a coupling 120 which permits pivotal or angular motion of the cleaning element unit base 110 relative to the main body 122.

In the illustrated example, the cleaning element unit 100 is seated within a cavity or depression formed into the main body 122, and supported by the pivotal coupling, whereby the cleaning element unit has sufficient clearance within the cavity to pivot to different angles with respect to the main body 122. The main body could for example be the whole or a part of an oral cleaning device such as a toothbrush head or mouthpiece. This arrangement is not essential, as will become clear through the presentation of further examples. It is presented here as one simple example illustrating the concept. Although one cleaning element unit 100 is shown, multiple may instead be provided.

The oral cleaning arrangement is arranged for engaging teeth 150 of a user with cleaning elements, 112 and 114, of the at least one cleaning element unit 100 during use, and wherein said coupling 120 is such as to permit changing of an angle of the base 110 with respect to teeth to which the device is being engaged. In some embodiments, the coupling may be such as to permit varying of an angle between the main body 122 and a directional axis 124 of the cleaning element unit extending from the first cleaning element group 114 to the second cleaning element group 112 The varying of this angle allows the cleaning element unit to pivot in a way so as to permit both the first cleaning element group and the second cleaning element group to make contact with a tooth surface to be cleaned in use. The coupling 120 may also be such as to restrict linear motion of the base relative to the main body along a direction defined by an axis 124 extending from the first cleaning element group 114 to the second cleaning element group 112. This may prevent motion transfer of the optimal brushing motions to movement of the coupling, thereby preventing the limiting of brushing action and reach. Brushing may be optimal if the cleaning element unit is stiff in the primary direction of brushing. In this way, the needed force for optimal brushing is maintained, and there may also be embodiments where a tapping motion is induced in the cleaning elements to further enhance brushing performance.

The cleaning elements, by way of non-limiting example, may comprise tufts of bristles, individual bristles, or any other elements or members suitable for cleaning the surface of a tooth. The coupling may, by way of non-limiting example, be a pivot point, two pivot points, three pivot points, numerous pivot points, a hinge, a ball joint, a flexible structure i.e. silicone rubber, a spring, two springs, three springs, numerous springs, or any other suitable coupling that permits a varying of an angle between the main body and a directional axis 124 of the cleaning element unit extending from the first cleaning element group 112 to the second cleaning element group 114.

As shown in the embodiment of Fig. 2, the cleaning element unit 100 may comprise two groups of cleaning elements, 112 and 114. Research has shown two groups of cleaning elements to be an optimal number for good overall cleaning of a tooth. This is especially useful when, in some embodiments, such as the one shown in Fig. 2, the groups of cleaning elements may define different spatial layouts, height profiles and/or angular profiles of the cleaning elements with respect to the base, compared to one another. This allows the groups of cleaning elements to be specifically optimized for cleaning different areas of a tooth. For instance, different cleaning element designs are needed to effectively clean gum line and interproximal regions. For example, the gum line region may be optimally cleaned at a 45° cleaning element roll angle, while the interproximal region may be optimally cleaned at a 90° cleaning element roll angle. Longer cleaning elements may be better at cleaning interproximal regions, and shorter cleaning elements may be better at cleaning gum line regions.

In some embodiments, a maximum height of the cleaning elements of the first group 114, in a direction normal to the base 110, may be greater than a maximum height of the cleaning elements of the second group 112, in a direction normal to the base, and preferably wherein said maximum height of the cleaning elements of the first group 114 is between 4-10mm, and preferably wherein said maximum height of the cleaning elements of the second group 112 is between 2-6 mm. Research has shown a combination of these heights may be optimal for good overall tooth cleaning.

The maximum height of the cleaning elements of the first group 114 may be between 4-10mm, 5-9mm, or 6-8mm. The maximum height of the cleaning elements of the second group 112 may be between 2-6mm or 3-5mm.

Although not shown in the example of Fig. 2, in some embodiments, the cleaning elements of the first group 114 of cleaning elements may extend from the base 110 at a first angle, and the cleaning elements of the second group 112 of cleaning elements may extend from the base at a different second angle. The second angle may be shallower than the first angle. The second angle may be between 40° and 90°, more preferably approximately 45°. The first angle may for example be between 80° and 90°, more preferably approximately 90°. Research has shown a combination of these angles may be optimal for good overall tooth cleaning.

The second angle may be between 40-90°, 50-80°, or 60-70°, but most preferably approximately 45°.

In some embodiments, the coupling may be such as to restrict rotational motion of the base 110 relative to the main body about a linear rotation axis normal to the surface of the base 110 from which the cleaning elements extend. This may prevent motion transfer of the optimal brushing motions to movement of the coupling, thereby preventing the limiting of brushing action and reach.

In some embodiments, the coupling may permit rotational motion of the base 110 relative to the main body in at least a first plane of rotation which is orientated substantially normal to a surface of the base from which the cleaning elements extend, and extends along a direction from the first group of cleaning elements 114 to the second group of cleaning elements 112, and preferably wherein both the first and second group of cleaning elements define parallel elongate shapes having a length, and wherein the plane of rotation is substantially perpendicular to a direction of said length. Rotational motion of the base relative to the main body in this plane of rotation permits angling both the first cleaning element group and the second cleaning element group towards a tooth surface 150 to be cleaned in use.

In some embodiments the coupling may further permit rotational motion of the base 110 relative to the main body in a second plane of rotation which is orientated substantially normal to a surface of the base from which the cleaning elements extend, and extends along a direction perpendicular to a line from the first group of cleaning elements 114 to the second group of cleaning elements 112. This may allow the cleaning element unit some additional contour following, if for example, the lower part of the tooth is thinner than the upper part, such as is the case for incisors and canine tooth geometries.

In some embodiments, the gap 116 between the first and second groups of cleaning elements, 114 and 112, is at least between 3-20mm. This corresponds to roughly 0.5-2 tooth widths, and research has shown this gap between groups of cleaning elements to be optimal. The gap may be between 3-20mm, 5-18mm, 7-16mm, 9-14mm, or 11-12mm.

In some embodiments, the oral cleaning arrangement may further comprise a functional component for performing an oral care function mounted at a location within the gap 116 between the first 114 and second group 112 of cleaning elements, and optionally wherein the functional component is one of: a source of light, a source of radio frequency field, at least one pair of electrodes, or one or more nozzles for emitting a fluid. This may allow optimization of the space available in the oral cleaning arrangement for the benefit of further improving oral care. For instance, the functional component may be a nozzle for toothpaste.

The cleaning arrangement 10 may be a section or component or portion of an oral care device or system. For example the cleaning element unit may be attached to a main body 122 of an oral care device or system. It is proposed in one set of embodiments for example that it be provided pivotally attached to a main body of a brush head part of a toothbrush, the brush head for instance being releasably attached to the toothbrush handle. In other cases, it could form part of a brushing mouthpiece device.

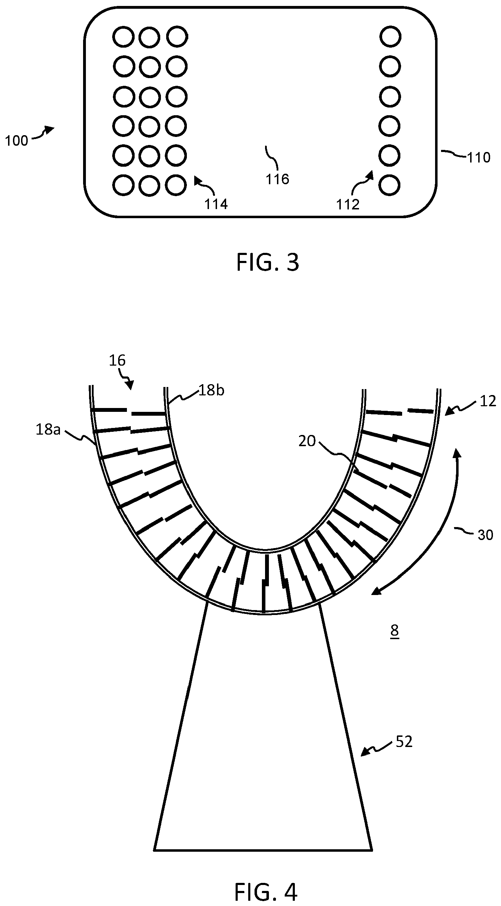

Referring now to Fig. 3, there is depicted a simplified plan-view diagram of a cleaning element unit 100 according to a proposed embodiment. An example embodiment of two groups of cleaning elements, 112 and 114, having different spatial layouts can be seen. Group 114 includes three rows of cleaning elements. Group 112 includes one row of cleaning elements. As well as having different spatial layouts to one another, the two groups may also have cleaning elements of different heights and/or angles relative to the base 110.

As shown in Fig. 3, in an example embodiment each group of cleaning elements, 112 and 114, may define an elongate shaped footprint on the base 110. Research has shown that groups of cleaning elements in an elongate shape, i.e. a vertical line, may outperform groups of cleaning elements in other layouts. Cleaning element groups having an elongate shaped footprint may also require low normal force to perform good cleaning, thereby minimizing the required brushing energy while increasing the comfort of the user. In some embodiments, the width of the elongate shaped footprint may be less than 6mm. Cleaning elements in a narrow layout may enter the narrow vertical spaces between teeth 150 most optimally, and may be more effective in contour following of the dentition than other layouts. The narrow layout may include one single column of cleaning elements, two columns of cleaning elements, three columns of cleaning elements, or any other suitable number whilst maintaining the cleaning element group's narrow layout. With multiple columns of cleaning elements, the cleaning elements should be small and spaced closely together to maintain a narrow layout for optimum cleaning.

To aid understanding of embodiments to be described in the next part of this disclosure, Fig. 4 depicts a simplified diagram showing the general structure of an example brushing mouthpiece device known in the art. A mouthpiece device 8 is shown with an arch-shaped mouthpiece portion 12 for insertion in the mouth and a handle 52 attached thereto. The mouthpiece portion body 12 comprises upper and lower tooth receiving channels 16 (lower channel not visible), each bounded on either side by boundary walls 18a, 18b, from each of which protrude an array of cleaning elements 20 which extend into the channel 16. The tooth receiving channels define an arcuate contour 30 shaped for approximately following a contour of at least a portion of a user's dental arch. Such devices are able to clean teeth more quickly and efficiently compared to a toothbrush, but contour following is a key problem in current mouthpiece devices.

As noted briefly earlier, in some embodiments, the coupling 120 may define a linear rotation axis which is at a distance from the base 110, and where in the cleaning element unit 100 may be connected to a location of the rotation axis by an arm structure. This may allow a pivot point to be at a distance from the cleaning element unit, whilst still permitting angling both the first cleaning element group 114 and the second cleaning element group 112 towards a tooth surface 150 to be cleaned in use, thereby defining an orbital motion of the cleaning element unit. An example of an arrangement embodying such a design will now be discussed.

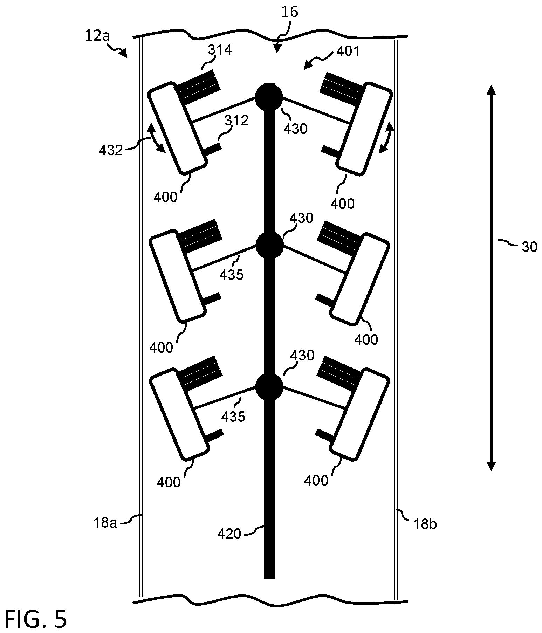

Referring to Fig. 5, there is depicted a simplified cross-sectional diagram of a section of a brushing mouthpiece device including an oral cleaning arrangement 401 according to a proposed embodiment. Depicted is a cross-sectional plan view of one length section 12a of the arcuate mouthpiece portion body 12, shown as straight for ease of illustration. The direction of the arcuate contour 30 is depicted. The mouthpiece portion defines a tooth receiving channel 16. In the illustrated example, the oral cleaning arrangement comprises a plurality of cleaning element units 400. However, this is not essential, and just one could be provided.

In the illustrated example, the cleaning element units 400 are arranged such that the cleaning elements of the first 314 and second 312 cleaning element groups of each cleaning element unit 400 extend into the channel 16 from a side of the channel for engagement with teeth surfaces during use. The channel may have boundary walls 18a, 18b, and wherein the cleaning element units 400 are supported so that the cleaning elements extend into the channel 16 from the walls. Alternatively, the cleaning element units 400 may themselves define the boundary to the channel.

There is a coupling provided between the cleaning element units 400 and the mouthpiece body 12. In this set of embodiments, the mouthpiece body 12 provides the main body 120 previously referred to in this disclosure, to which the cleaning element units are coupled. The coupling in this case comprises at least one connection point 430 displaced from each cleaning element unit 400 at a location in-between sides of the channel 16, for example integrated in a floor of the channel. In the illustrated example, there are a series of connection points, 430, one for each pair of cleaning element units facing in opposition to one other from opposite respective sides of the channel 16.

The coupling further comprises, for each cleaning element unit 400, an arm 435 extending from a respective connection point 430 to the cleaning element unit base 110. The connection point permits pivotal motion of the arm, thereby permitting swinging of each cleaning element unit 400 along an arc 432 relative to the connection point 430 to thereby change an angle of the cleaning element unit 400 relative to tooth surfaces of teeth received in the channel. The or each arm 435 may include a horizontal section embedded in a cavity beneath the floor of the channel 16, and a vertical section which directly connects to the cleaning element unit 400 so that the unit can be supported at a position elevated above the channel floor in the channel.

In the arrangement of Fig, 5, the oral cleaning arrangement 401 comprises a series of pairs of cleaning element units 400 facing one another from opposite positions across the mouthpiece channel 16, for respectively cleaning opposite sides of teeth received in the channel. Both cleaning element units 400 of each pair may be connected to a common connection point 430 by respectively oppositely extending arms 435. The pivotal motion of the pair of cleaning element units may be coupled together, such that the two pivotally swing together about the connection point. This allows both sides of a tooth to be cleaned simultaneously.

In the illustrated example, the connection points for the multiple pairs of cleaning element units are mechanically linked via a shaft 420. The sections of the shaft connecting any two neighboring pairs of cleaning element units may be of different lengths to permit the cleaning element units to be placed at defined locations along the dental arch of the user, for example thereby accommodating the increasing size of teeth from incisors to molars. The length of each arm 435 can also vary to accommodate the varying width of teeth. The layout of each group of cleaning elements on each different cleaning element unit may also vary so as to optimize cleaning of the different teeth they are positioned to clean. A mouthpiece may particularly benefit from the pivotable oral cleaning arrangement described in this application as a user cannot directly manipulate the orientation of the cleaning elements themselves.

In general, a provided mouthpiece device may be adapted for cleaning teeth around the whole of a dental arch of the user, or just a portion of the dental arch, for example half of the dental arch, or a smaller section of the dental arch. By way of example, an overall shape of the brushing mouthpiece device may be a C-shape for treating a full jaw or for example a J-shape to treat half a jaw, or even smaller shapes to treat multiple teeth spanning a lesser portion of the jaw.

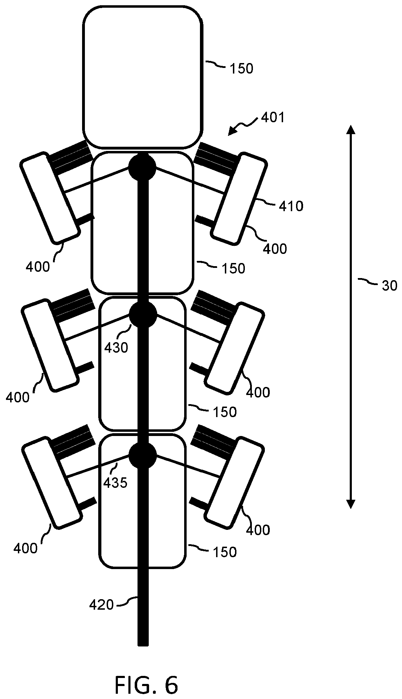

Referring now to Fig. 6, there is depicted a schematic diagram of the section of the brushing mouthpiece device of Fig. 5 in use. It can be seen more clearly how the cleaning element units 400 may engage both sides of the teeth 150. As shown in Fig. 5 and Fig. 6, the multiple cleaning element units are positioned at a series of positions along the arcuate contour 30 defined by the mouthpiece portion of the brushing mouthpiece device, for cleaning teeth at different locations along the dental arch. This allows the mouthpiece device to be capable of brushing multiple teeth at once. The brushing mouthpiece device may also have upper and lower tooth receiving channels for receiving upper and lower rows of teeth simultaneously, separated from one another by a mutual channel floor which integrates the connecting point and arms, and wherein the device includes at least one cleaning element unit arranged for engaging with teeth received in each of the upper and lower tooth receiving channels respectively. This may allow both upper and lower teeth to be cleaned with the same device, and potentially at the same time.

In some embodiments, each pair of cleaning element units 400 may have upper and lower sections, arranged for engaging teeth 150 in the upper and lower channels of a mouthpiece device simultaneously. Each section may have a respective first and second group of cleaning elements. This provides an alternate way in which both the upper and lower teeth may be cleaned with the same mouthpiece device, and potentially at the same time.

In some embodiments, the oral cleaning arrangement may further comprise a motor for driving a vibration in the oral cleaning arrangement. The motor may be positioned on the rigid bar 420, connecting the pairs of arms 435 together. Alternatively, the motor may be positioned in a handle 52. There may also be more than one motor or different kinds of actuators to induce the intended motion. Research has shown that a vibrating, tapping-like motion of the cleaning elements may provide improved tooth cleaning.

In some embodiments, as shown in Fig. 5 and Fig. 6, the oral cleaning arrangement may comprise a plurality of cleaning element units 400 arranged side by side. This may allow improved cleaning of multiple teeth 150 simultaneously.

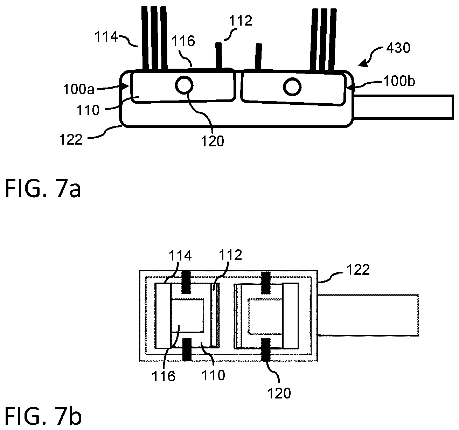

Referring now to Fig. 7a and Fig. 7b, there is depicted a side-profile and plan view of a toothbrush head including an oral cleaning arrangement according to a proposed embodiment. For example, in an embodiment there may be provided an oral cleaning arrangement comprising two cleaning element units 100a, 100b, and a main body 122 to which each cleaning element unit 100a, 100b is pivotally coupled via a coupling 120. The main body 120 in this case forms the body of a toothbrush head 430, or a platen of the toothbrush head. The cleaning element units may have mirrored layouts of the groups of cleaning elements, 112 and 114. The use of two cleaning element units, as opposed to more than two, may reduce interference between the cleaning elements. The addition of any more cleaning element units may be suboptimal as interference between the cleaning elements may reduce contour-following. The couplings may be rotating pivots or flexible rubber connections. A flexible rubber connection may give similar functionality to the rotating pivot but with less contamination risk, i.e. less chance of dried toothpaste interfering with performance of the coupling. This may provide an enhanced toothbrush, capable of better overall tooth cleaning.

In any embodiment described in this document, the cleaning arrangement includes at least a portion which is for being received in the mouth during use. Preferably the coupling between the cleaning unit(s) and the main body of the arrangement is such as to define at least one rotation axis which passes through the at least portion which is received in the mouth.

Another aspect of the invention provides an oral care device comprising an oral cleaning arrangement in accordance with any embodiment described in this disclosure or in accordance with any claim of this application.

In some embodiments, the oral care device is a toothbrush.

In some embodiments, the oral care device is in particular a powered toothbrush.

The cleaning arrangement may form a head of a toothbrush. This may for example be adapted for releasable coupling with a handle section of the toothbrush.

The main body referred to previously, relative to which the cleaning unit(s) pivot may be a whole or a part of the platen of the brush head, wherein the platen is for being received in the mouth during operation.

The oral care device may in some embodiments be a brushing mouthpiece device.

The cleaning arrangement may form a mouthpiece portion of this mouthpiece device, meaning a part that is designed for being received in the mouth during operation.

The oral care device may further comprise an actuation means for inducing, in operation, a cyclical or periodic motion of cleaning elements.

The cyclical or periodic motion may in some embodiments be linear cyclical motion along a linear directional axis and wherein the coupling 120 is such that the cleaning element unit base is pivotable relative to the main body of the oral cleaning arrangement about a rotational axis which is substantially parallel with said linear directional axis of the motion. This may provide improved cleaning of a tooth with less effort expended by a user of the oral care device.

In some embodiments, the coupling of the oral care device may be such as to prevent linear motion of the cleaning element unit base 110 relative to the main body of the oral cleaning arrangement along a direction of said linear axis. This may prevent motion transfer of the optimal brushing motions to movement of the coupling, thereby preventing the limiting of brushing action and reach.

As has been discussed throughout, different arrangements of cleaning elements are optimal for different types of cleaning, e.g. gum-line or interproximal. Cleaning elements may have different optimal heights, lengths, and/or angular extensions for particular types of tooth cleaning. In the context of the present application, the at least two groups of the cleaning elements may define different spatial layouts, height profiles, and/or angular profiles of the cleaning elements with respect to the base compared to one another.

Purely by way of illustration, Table 1 below outlines properties of a set of four example cleaning element layouts which could be used in one or more of the groups of cleaning elements provided in embodiments of the present application:

**Table 1**

| **Layout** | **Use** | **Cleaning element length (mm)** | **Tuft roll angle (deg)** | **Tuft area (mm²)** | **Number of tufts** |
|---|---|---|---|---|---|
| A | Gum-line | 4 | 45 | 0.5 | 6 |
| B | Interproximal | 10 | 90 | 0.5 | 18 |
| c | Gum-line | 10 | 45 | 3 | 3 |
| D | Interproximal | 10 | 90 | 3 | 3 |

The table indicates how different properties of each possible layout of cleaning elements can vary, including the lengths of the cleaning elements, the roll angle of the tufts into which the cleaning elements are organized (meaning the angle of extension of the cleaning element tufts from the base), the cross-sectional area of each tuft, and the number of tufts included as part of the layout. The different groups of cleaning elements referred to earlier in this document may each be populated by a set of cleaning elements which follows one of these layouts, by way of example. Other layouts are also possible and the invention is not restricted to those mentioned above.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. An oral cleaning arrangement, comprising:
a main body;
at least one cleaning element unit, the cleaning element unit comprising a base and further comprising at least two groups of cleaning elements upstanding from the base, each group defining a spatial layout, height profile and/or angular profile of the cleaning elements with respect to the base, and the two groups being spaced from one another by a gap;
wherein the cleaning element unit is linked to the main body by a coupling which permits pivotal or angular motion of the cleaning element unit base relative to the main body;
wherein the oral cleaning arrangement is arranged for engaging teeth of a user with cleaning elements of the at least one cleaning element unit during use, and wherein said coupling is such as to permit changing of an angle of the base with respect to teeth to which the device is being engaged.

2. The oral cleaning arrangement of claim 1, wherein the cleaning element unit comprises two groups of cleaning elements.

3. The oral cleaning arrangement of claim 1 or 2, wherein the groups of cleaning elements define different spatial layouts, height profiles and/or angular profiles of the cleaning elements with respect to the base, compared to one another.

4. The oral cleaning arrangement of any of claims 1-3, wherein said coupling is such as to permit varying of an angle between the main body and a directional axis of the cleaning element unit extending from the first cleaning element group to the second cleaning element group.

5. The oral cleaning arrangement of any of claims 1-4, wherein the coupling is such as to restrict linear motion of the base relative to the main body along a direction defined by an axis extending from the first cleaning element group to the second cleaning element group.

6. The oral cleaning arrangement of any of claims 1-5, wherein each group of cleaning elements defines an elongate shaped footprint on the base.

7. The oral cleaning arrangement of any of claims 1-6, wherein the coupling permits rotational motion of the base relative to the main body in at least a first plane of rotation which is orientated substantially normal to a surface of the base from which the cleaning elements extend, and extends along a direction from the first group of cleaning elements to the second group of cleaning elements, and preferably wherein both the first and second group of cleaning elements define footprints on the base which define parallel elongate shapes having a length, and wherein the plane of rotation is substantially perpendicular to a direction of said length.

8. The oral cleaning arrangement of claim 7, wherein the coupling further permits rotational motion relative to the main body in a second plane of rotation which is orientated substantially normal to a surface of the base from which the cleaning elements extend, and extends along a direction perpendicular to a line from the first group of cleaning elements to the second group of cleaning elements.

9. The oral cleaning arrangement of any of claims 1-8, wherein the oral cleaning arrangement is for use as part of a brushing mouthpiece device,
wherein the oral cleaning arrangement comprises a mouthpiece portion for at least partial receipt in the mouth during use,
wherein the body of the mouthpiece portion defines a tooth receiving channel defining an arcuate contour shaped for approximately following a contour of at least a portion of a user's dental arch to permit receipt of a row of teeth into the channel;
wherein the at least one cleaning element unit is arranged such that the cleaning elements of the first and second cleaning element groups extend into the channel from a side face for engagement with teeth surfaces during use.

10. The oral cleaning unit of claim 9, wherein the coupling comprises a connection point displaced from the cleaning element unit at a location in-between sides of the channel, and integrated in a floor of the channel, and the coupling further comprising an arm extending from the connection point to the cleaning element unit base;
and wherein the connection point permits an angular motion of the arm for permitting swinging of the cleaning element unit along an arc relative to the connection point to thereby change an angle of the cleaning element unit relative to tooth surfaces of teeth received in the channel.

11. The oral cleaning arrangement of claim 9 or 10, wherein the device comprises multiple cleaning element units at a series of positions along the arcuate contour defined by the mouthpiece portion, for cleaning teeth at different locations along the dental arch.

12. The oral cleaning arrangement of any of claims 9-11, wherein the device includes a pair of cleaning element units facing one another from opposite positions across the channel, for respectively cleaning different sides of teeth received in the channel, and connected to said same connection point by respectively oppositely extending arms,
wherein the pivotal motion of the pair of cleaning element units is coupled such that the two pivotally swing together about the connection point.

13. The oral cleaning arrangement of any preceding claim, wherein the oral cleaning arrangement forms a brush head for a toothbrush.

14. An oral care device comprising:
an oral cleaning arrangement as claimed in any preceding claim; and
an actuation means for inducing, in operation, a periodic motion of cleaning elements.

15. The device of claim 14, wherein the periodic motion is linear cyclical motion along a linear directional axis; and wherein the coupling is such that the cleaning element unit base is pivotable relative to the main body of the oral cleaning arrangement about a rotational axis which is substantially parallel with said linear directional axis of the motion.
